# EUROPEAN PATENT APPLICATION

(11) **EP 4 404 543 A1**
(43) Date of publication of application: **24.07.2024**
(21) Application number: 23217680.0
(22) Date of filing: 18.12.2023
(51) Int. Cl.: H04M 1/72412, H04M 1/725, H04W 76/14, H04W 84/18

(54) **SYSTEM, TERMINAL DEVICE, AND METHOD FOR FORMING A COMMUNICATION LINK**

(30) Priority: 17.01.2023 CN 202310076320
(71) Applicant: Optoma Coporation, New Taipei City (TW)
(72) Inventor: Chen, Hsing-Yu, 231633 NEW TAIPEI CITY (TW); Wu, Lu-Heng, 231633 NEW TAIPEI CITY (TW)
(74) Representative: Ter Meer Steinmeister & Partner

(57) **Abstract**

A system, a terminal device, and a method for forming a communication link are provided. The method includes: broadcasting an audio signal by a speaker of a first terminal device, wherein the audio signal includes an identifier of the first terminal device; broadcasting an electro-magnetic signal by a first Bluetooth communication transceiver of the first terminal device, wherein the electro-magnetic signal comprises an encoded message; and encoding a first message according to the identifier to generate the encoded message by a first processing apparatus of the first terminal device.

## Description

This application claims the priority benefit of China application serial no. 202310076320.4, filed on January 17, 2023.

### Background

### Technical Field

The disclosure relates to a wireless communication technology, and in particular relates to a system, a terminal device, and a method for forming a communication link.

### Description of Related Art

When a user enters a specific field with a terminal device, if the user intends to connect (link) the terminal device to a device in the field for field communication, the user is required to manually operate the terminal device to access the local area network (LAN) of the field based on the bring your own device (BYOD) mechanism or the bring your own meeting (BYOM) mechanism. Then, the terminal device may detect other devices in the field through the LAN for connection. When performing device detection, the terminal device may be required to be configured with additional sensors. Accordingly, the conventional field communication technology is not only expensive, but also brings inconvenience to users.

The information disclosed in Description of Related Art is only for enhancement of understanding of the background of the described technology and therefore it may contain information that does not form the prior art that is already known to a person of ordinary skill in the art. Further, the information disclosed in Description of Related Art does not mean that one or more problems to be resolved by one or more embodiments of the disclosure was acknowledged by a person of ordinary skill in the art.

### Summary

A system, a terminal device, and a method for forming a communication link are provided, which may automatically establish a connection between a terminal device carried by a user and a terminal device disposed in a field.

A terminal device, according to the disclosure, includes a speaker, a Bluetooth communication transceiver, and a processing apparatus. The speaker is configured to broadcast an audio signal, wherein the audio signal comprises an identifier of the terminal device. The Bluetooth communication transceiver is configured to broadcast an electro-magnetic signal, wherein the electro-magnetic signal comprises an encoded message. The processing apparatus is electrically coupled to the Bluetooth communication transceiver and the speaker, wherein the processing apparatus is configured to encode a first message, according to the identifier, to generate the encoded message.

In one or more embodiments, the first message may include connection configuration information of the terminal device.

In one or more embodiments, the processing apparatus may be configured to execute a specific application to receive a connecting request corresponding to the connection configuration information through the Bluetooth communication transceiver and establish a connection according to the connecting request.

In one or more embodiments, the first audio signal may include an ultrasonic signal supported by the data over sound technology.

In one or more embodiments, a frequency of the ultrasonic signal may be greater than 20,000 Hz.

In one or more embodiments, the electro-magnetic signal may include an electro-magnetic wave signal supported by Bluetooth communication technology.

In one or more embodiments, the identifier may include one of the following: a serial number and a media access control (MAC) address.

In one or more embodiments, the speaker may be configured to broadcast the audio signal periodically.

In one or more embodiments, the Bluetooth communication transceiver may be configured to broadcast the electro-magnetic signal periodically.

In one or more embodiments, when the terminal device is in a standby state, the processing apparatus may be configured to execute the specific application.

A terminal device, according to the disclosure, includes an audio receiver, a Bluetooth communication transceiver, and a processing apparatus. The audio receiver is configured to receive a first audio signal, wherein the first audio signal comprises a first identifier. The Bluetooth communication transceiver is configured to receive an electro-magnetic signal, wherein the electro-magnetic signal comprises an encoded message. The processing apparatus is electrically coupled to the Bluetooth communication transceiver and the audio receiver, wherein the processing apparatus is configured to decode the encoded message according to the first identifier to obtain a first message.

In one or more embodiments, the terminal device may be configured to receive the first audio signal including the first identifier at a first time point and a second audio signal including a second identifier at a second time point.

In response to the first time point being later than the second time point, the processing apparatus may be configured to execute a specific application to select the first identifier from the first identifier and the second identifier to decode the encoded message according to the first identifier.

In one or more embodiments, the first message may include connection configuration information.

In response to obtaining the connection configuration information, the processing apparatus may be configured to execute the specific application to transmit a connecting request corresponding to the connection configuration information through the Bluetooth communication transceiver, to establish a connection.

In one or more embodiments, the first audio signal may include an ultrasonic signal supported by the data over sound technology.

In one or more embodiments, a frequency of the ultrasonic signal may be greater than 20,000 Hz.

In one or more embodiments, the electro-magnetic signal may include an electro-magnetic wave signal supported by Bluetooth communication technology.

In one or more embodiments, the first identifier may include one of the following: a serial number and a media access control address.

A system for forming a communication link, according to the disclosure, may include a first terminal device and a second terminal device.

The first terminal device may include a speaker, a first Bluetooth communication transceiver, and a first processing apparatus.

The speaker may be configured to broadcast a first audio signal, wherein the first audio signal comprises a first identifier of the first terminal device.

The first Bluetooth communication transceiver may be configured to broadcast an electro-magnetic signal, wherein the electro-magnetic signal comprises an encoded message.

The first processing apparatus may be electrically coupled to the first Bluetooth communication transceiver and the speaker, wherein the first processing apparatus is configured to encode a first message according to the first identifier to generate the encoded message.

The second terminal device may include an audio receiver, a second Bluetooth communication transceiver, and a second processing apparatus.

The audio receiver may be configured to receive the first audio signal from the first terminal device.

The second Bluetooth communication transceiver may be configured to receive the electro-magnetic signal from the first terminal device.

The second processing apparatus may be electrically coupled to the second Bluetooth communication transceiver and the audio receiver.

The second processing apparatus may be configured to decode the encoded message according to the first identifier to obtain the first message.

In one or more embodiments, the first message may include connection configuration information.

The second terminal device may be configured to obtain the connection configuration information and transmit a connecting request corresponding to the connection configuration information to the first terminal device, through the second Bluetooth communication transceiver, to establish a connection with the first terminal device.

In one or more embodiments, the second terminal device may be configured to receive the first audio signal including the first identifier at a first time point and receive a second audio signal including a second identifier at a second time point.

In response to the first time point being later than the second time point, the second terminal device may be configured to select the first identifier from the first identifier and the second identifier to decode the encoded message according to the first identifier.

In one or more embodiments, the speaker may be configured to broadcast the first audio signal periodically.

In one or more embodiments, the first Bluetooth communication transceiver ma ybe configured to broadcast the electro-magnetic signal periodically.

A method for forming a communication link, according to the disclosure, includes the following operation. The method includes: broadcasting an audio signal periodically by a speaker of a first terminal device, wherein the audio signal comprises an identifier of the first terminal device; broadcasting an electro-magnetic signal by a first Bluetooth communication transceiver of the first terminal device, wherein the electro-magnetic signal comprises an encoded message; and encoding a first message according to the identifier to generate the encoded message by a first processing apparatus of the first terminal device.

In one or more embodiments, the method may further include: receiving the audio signal by an audio receiver of a second terminal device; receiving an electro-magnetic signal by a second Bluetooth communication transceiver of the second terminal device; decoding the encoded message according to the identifier to obtain the first message by a second processing apparatus of the second terminal device.

In one or more embodiments the first message may comprise connection configuration information.

In one or more embodiments, the method may further include: transmitting, by the second device terminal, a connecting request corresponding to the connection configuration information to the first terminal device to establish a connection with the first terminal device.

In one or more embodiments, the method may further include disconnecting the connection between the second terminal device and the first terminal device when the second terminal device does not receive one of the audio signal and the electro-magnetic signal during a predetermined time period.

Based on the above, the terminal device broadcasts the encoded connection configuration information through an electro-magnetic signal, and broadcasts an identifier for decoding the encoded message through an audio signal. Due to the low penetration characteristics of the audio signal, only terminal devices in a specific field may receive the identifier and obtain connection configuration information according to the identifier. Accordingly, the disclosures improve the automatic connection function of the terminal device, and prevent the terminal device from connecting to a wrong target when executing the automatic connection function.

Other objectives, features and advantages of the embodiments will be further understood from the further technological features disclosed by the embodiments wherein there are shown and described preferred embodiments, simply by way of illustration of modes best suited to carry out the disclosure.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram of a usage scenario of a field communication link according to an embodiment of the disclosure.
FIG. 2 is a schematic diagram of a system for forming a communication link according to an embodiment of the disclosure.
FIG. 3 is a flowchart of a method for forming a communication link according to an embodiment of the disclosure.
FIG. 4 is a flowchart of a method for forming a communication link according to an embodiment of the disclosure.
FIG. 5 is a flowchart of a method for forming a communication link according to another embodiment of the disclosure.
FIG. 6 is a flowchart of a method for forming a communication link according to another embodiment of the disclosure.

### DETAILED DESCRIPTION OF DISCLOSED EMBODIMENTS

It is to be understood that other embodiment may be utilized and structural changes may be made without departing from the scope of the disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

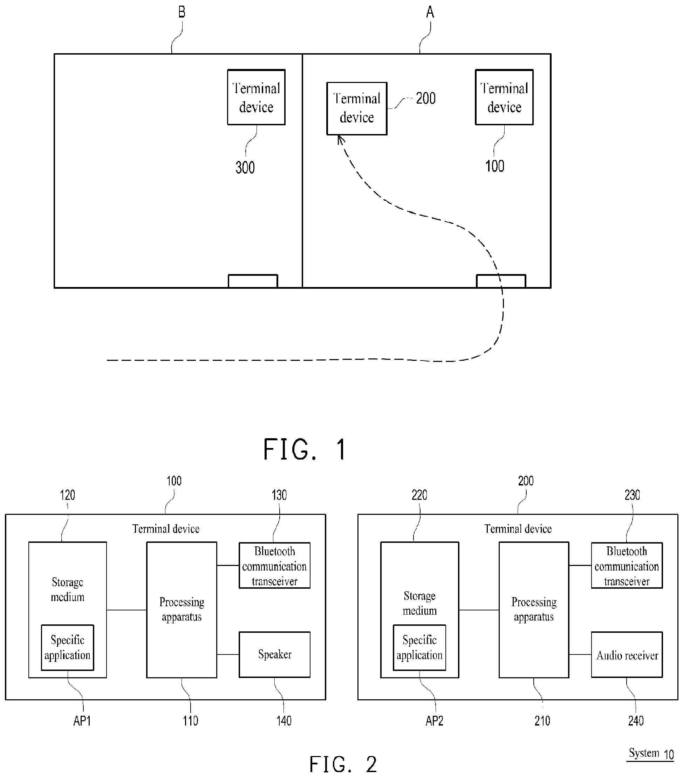

FIG. 1 is a schematic diagram of a usage scenario of a field communication link according to an embodiment of the disclosure. It is assumed that the terminal device 100 with connection capability is disposed in field A, and the terminal device 300 with connection capability is disposed in field B, in which the terminal device 100 or the terminal device 300 is, for example, a projector, display device or the like. The conventional automatic connection function usually determines the connection target based on the signal strength. After the user enters the field A with the terminal device 200, the terminal device 200 may detect the terminal device 100 in the field A and the terminal device 300 in the field B to determine the connection target. Although the terminal device 300 is located in a different field from the terminal devices 100 and 200, the distance between the terminal device 300 and the terminal device 200 is closer to the distance between the terminal device 100 and the terminal device 200. So, for the terminal device 200, the strength of the wireless signal of the terminal device 300 may be greater than the strength of the wireless signal of the terminal device 100. Therefore, if the terminal device 200 determines the target of automatic connection based on the signal strength, the terminal device 200 automatically connects to the terminal device 300 in the field B instead of the terminal device 100 in the field A. In this way, it may be inconvenient for the user, and may also cause the information of the terminal device 100 to be leaked to the personnel in the field B. Accordingly, the disclosure discloses a technology for field communication, which may prevent the terminal device 100 from connecting to the wrong target (i.e., a device located in a different field) when executing the automatic connection function.

FIG. 2 is a schematic diagram of a system 10 for forming a communication link according to an embodiment of the disclosure. The system 10 may include a terminal device 100 disposed in a specific field (i.e., the field A) and a terminal device 200 carried by the user. The terminal device 200 is communicatively connected to the terminal device 100. The connection method is described in detail below.

The terminal device 100 may include a processing apparatus 110, a storage medium 120, a Bluetooth communication transceiver 130, and a speaker 140. The terminal device 100 is, for example, a projector or a display device fixed in a specific field such as a conference room, a living room in a house, etc.

The processing apparatus 110 is, for example, at least one processor. The processor may be a central processing unit (CPU), or other programmable general-purpose or special-purpose micro control unit (MCU), microprocessor, digital signal processor (DSP), programmable controller, application specific integrated circuit (ASIC), graphics processing unit (GPU), image signal processor (ISP), image processing unit (IPU), arithmetic logic unit (ALU), complex programmable logic device (CPLD), field programmable gate array (FPGA), or other similar elements, or a combination of the elements thereof. The processing apparatus 110 of the terminal device 100 may be electrically coupled to the storage medium 120, the Bluetooth communication transceiver 130, and the speaker 140, and access and execute multiple modules and a specific application AP1 stored in the storage medium 120 to execute various functions of the terminal device 100. The specific application AP1 is, for example, an application program for automatically forming a communication link. In one embodiment, the processing apparatus 110 of the terminal device 100 may execute the specific application AP1 when the terminal device 100 is in a standby state. To further illustrate, in the standby state, the terminal device 100 puts the processing apparatus 110 in a state where the minimum operations may be executed. For example, the terminal device 100 uses a power supply (not shown) to supply power to the elements or modules performing the aforementioned minimum operations, and stops supplying power to other elements or modules. In this embodiment, when the terminal device 100 is in the standby state, the processing apparatus 100 is in a state where the specific application AP1 may also be executed.

The storage medium 120 is, for example, any type of fixed or removable random access memory (RAM), read-only memory (ROM), flash memory, hard disk drive (HDD), solid state drive (SSD), or similar elements, or a combination of the elements thereof configured to store multiple modules and/or the specific application AP 1 executable by the processing apparatus 110.

The Bluetooth communication transceiver 130 transmits and receives signals wirelessly. The Bluetooth communication transceiver 130 may also perform operations such as low noise amplification, impedance matching, frequency mixing, up or down frequency conversion, filtering, amplification, etc. The Bluetooth communication transceiver 130 may support Auracast Bluetooth low energy audio broadcasting technology.

The terminal device 200 may include a processing apparatus 210, a storage medium 220, a Bluetooth communication transceiver 230, and an audio receiver 240. The terminal device 200 may include but not limited to portable electronic devices such as a client terminal, a laptop, a personal digital assistant (PDA), a personal computer (PC), a tablet, and a smartphone.

The processing apparatus 210 is, for example, at least one processor. The processor may be a central processing unit, or other programmable general-purpose or special-purpose micro control unit, microprocessor, digital signal processor, programmable controller, application specific integrated circuit, graphics processing unit, image signal processor, image processing unit, arithmetic logic unit, complex programmable logic device, field programmable gate array, or other similar elements, or a combination of the elements thereof. The processing apparatus 210 may be electrically coupled to the storage medium 220, the Bluetooth communication transceiver 230, and the audio receiver 240, and access and execute multiple modules and a specific application AP2 stored in the storage medium 220 to execute various functions of the terminal device 200. The specific application AP2 is, for example, an application program for automatically forming a communication link. In one embodiment, the processing apparatus 210 may execute the specific application AP2 when the terminal device 200 is in a standby state. To further illustrate, in the standby state, the terminal device 200 puts the processing apparatus 210 in a state where the minimum operations may be executed. For example, the terminal device 200 uses a power supply (not shown) to supply power to the elements or modules performing the aforementioned minimum operations, and stops supplying power to other elements or modules. In this embodiment, when the terminal device 200 is in the standby state, the processing apparatus 200 is in a state where the specific application AP2 may also be executed.

The storage medium 220 is, for example, any type of fixed or removable random access memory (RAM), read-only memory (ROM), flash memory, hard disk drive (HDD), solid state drive (SSD), or similar elements, or a combination of the elements thereof configured to store multiple modules and/or the specific application AP2 executable by the processing apparatus 210.

The Bluetooth communication transceiver 230 transmits and receives signals wirelessly. The Bluetooth communication transceiver 230 may also perform operations such as low noise amplification, impedance matching, frequency mixing, up or down frequency conversion, filtering, amplification, etc. The Bluetooth communication transceiver 230 may support Auracast Bluetooth low energy audio broadcasting technology.

The audio receiver 240 may include a microphone, a dynamic microphone, a condenser microphone, an electret condenser microphone, a micro-electrical mechanical system (MEMS) microphone, an aluminum ribbon microphone, or a carbon microphone, etc.

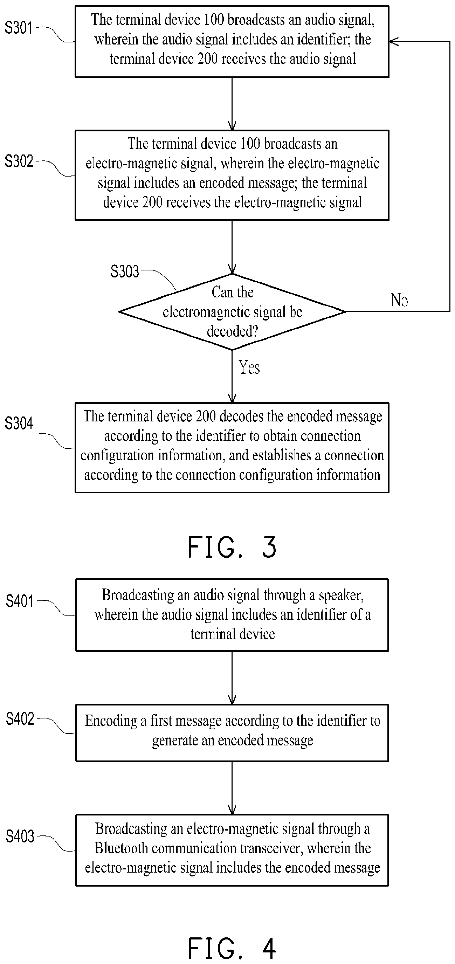

FIG. 3 is a flowchart of a method for forming a communication link according to an embodiment of the disclosure, in which the method may be implemented by the system 10 shown in FIG. 2.

In step S301, the processing apparatus 110 of the terminal device 100 may broadcast an audio signal through the speaker 140, in which the audio signal may include the identifier of the terminal device 100. The processing apparatus 210 of the terminal device 200 may receive the audio signal through the audio receiver 240 to obtain the identifier of the terminal device 100 from the audio signal. In one embodiment, the processing apparatus 110 may broadcast an audio signal periodically through the speaker 140. The terminal device 100 may enable the processing apparatus 110 to execute a specific application AP1 in the standby state. When the specific application AP2 is running, the speaker 140 periodically provides the audio signal with the identifier of the terminal device 100. The terminal device 200 may enable the processing apparatus 210 to execute a specific application AP2 in the standby state. When the specific application AP2 is running, the receiver 240 may continuously detect whether there is an audio signal, and if so, receive the audio signal. However, when the terminal device 100 and the terminal device 200 are in a normal operating state, the processing apparatus 110 and the processing apparatus 210 may also execute the specific applications AP1 and AP2. That is, the speaker 140 may also periodically provide an audio signal with the identifier of the terminal device 100, and the receiver 240 continuously detects whether there is an audio signal, and if so, receives the audio signal.

The identifier of the terminal device 100 is configured to decode the data broadcast by the terminal device 100. In one embodiment, the identifier may include a serial number of the terminal device 100, a media access control (MAC) address, or other forms of data that may be used as unique hardware identification. In order to limit the recipients of the audio data broadcast by the terminal device 100 to the terminal devices (e.g., the terminal device 200) in the field A, the processing apparatus 110 may increase the frequency of the audio signal to reduce the penetration of the audio signal. In this way, other terminal devices outside field A may be prevented from receiving the audio signal. In one embodiment, the audio signal may include an ultrasonic signal supported by data over sound technology, in which the frequency of the ultrasonic signal may be greater than or equal to 20,000 Hz, which is a high-frequency signal that cannot be clearly recognized by the human ear. The amount of data carried by an audio signal is about 16 bits to 32 bits. Therefore, the audio signal including the identifier of the terminal device 100 may be periodically transmitted through the speaker 140 in a manner that is the data over sound technology.

In step S302, the processing apparatus 110 of the terminal device 100 may broadcast an electro-magnetic signal through the Bluetooth communication transceiver 130, in which the electro-magnetic signal may include an encoded message. The processing apparatus 210 of the terminal device 200 may receive the electro-magnetic signal through the Bluetooth communication transceiver 230. The electro-magnetic signal is, for example, an electro-magnetic wave signal supported by Bluetooth communication technology.

Specifically, according to the identifier of the terminal device 100, the processing apparatus 110 may encode a first message corresponding to the terminal device 100 to generate an encoded message, in which the first message may include connection configuration information. The connection configuration information of the terminal device 100 is information to establish a connection between the terminal device 100 and other terminal devices. That is to say, only the terminal device (e.g., the terminal device 200) that decodes the encoded message may obtain the connection configuration information of the terminal device 100, thereby automatically connecting to the terminal device 100 according to the encoded message being decoded. After obtaining the encoded message, the processing apparatus 110 may broadcast an electro-magnetic signal including the encoded message through the Bluetooth communication transceiver 130 using Bluetooth low energy audio broadcasting technology. The processing apparatus 210 of the terminal device 200 may receive the electro-magnetic signal including the encoded message through the Bluetooth communication transceiver 230 using the Bluetooth low energy audio broadcasting technology. In one embodiment, the processing apparatus 110 may broadcast the electro-magnetic signal periodically through the Bluetooth communication transceiver 130. The terminal device 100 may enable the processing apparatus 110 to execute the specific application AP1 in the standby state. When the specific application AP1 is running, the Bluetooth communication transceiver 130 broadcasts the electro-magnetic signal periodically. The terminal device 200 may enable the processing apparatus 210 to execute a specific application AP2 in the standby state. When the specific application AP2 is running, the Bluetooth communication transceiver 230 may continuously detect whether there is an electro-magnetic signal, and if so, receive the electro-magnetic signal. However, when the terminal device 100 and the terminal device 200 are in a normal operating state, the processing apparatus 110 and the processing apparatus 210 may also execute specific applications AP1 and AP2.

In step S303, the processing apparatus 210 of the terminal device 200 determines whether the electro-magnetic signal may be decoded. If the processing apparatus 210 determines that the encoded message in the electro-magnetic signal may be decoded, then enter step S304. If the processing apparatus 210 determines that the encoded message in the electro-magnetic signal cannot be decoded, step S301 is re-executed so that the terminal device 200 continuously detects the audio signal and the electro-magnetic signal broadcast by the terminal device 100.

Specifically, if the terminal device 200 receives the audio signal and the electro-magnetic signal broadcast from the terminal device 100, the processing apparatus 210 may attempt to decode the encoded message in the electro-magnetic signal using the identifier obtained from the audio signal. If the encoded message may be decoded by the identifier, the processing apparatus 210 determines that the encoded message in the electro-magnetic signal may be decoded. If the encoded message cannot be decoded by the identifier, the processing apparatus 210 may determine that the encoded message in the electro-magnetic signal cannot be decoded.

In one embodiment, the processing apparatus 210 may only use the identifier in the latest received audio signal to decode the encoded message in the electro-magnetic signal. It is assumed that the processing apparatus 210 receives two identifiers from different audio signals, namely a first identifier obtained at a first time point and a second identifier obtained at a second time point. If the first time point is later than the second time point (i.e., the first identifier is the latest received identifier), the processing apparatus 210 may select the first identifier from the first identifier and the second identifier to decode the encoded messages.

Taking FIG. 1 as an example, the terminal device 300 has the same functions as the terminal device 100. It is assumed that the user carrying the terminal device 200 walks through the field B and enters the field A. When passing through the field B, the terminal device 200 may receive the audio signal and the electro-magnetic signal broadcast by the terminal device 300, and obtain the identifier of the terminal device 300 from the audio signal. Then, after the user enters field A, the terminal device 200 may receive the audio signal and the electro-magnetic signal broadcast by the terminal device 100, and obtain the identifier of the terminal device 100 from the audio signal. Since the time of obtaining the identifier of the terminal device 100 is later than the time of obtaining the identifier of the terminal device 300, the terminal device 200 selects to use the identifier of the terminal device 100 to decode the encoded message in the electro-magnetic signal broadcast by the terminal device 100.

In step S304, the processing apparatus 210 of the terminal device 200 may decode the encoded message according to the identifier corresponding to the terminal device 100 to obtain the connection configuration information, and automatically establishes the connection between the terminal device 100 and the terminal device 200 according to the connection configuration information. Specifically, the processing apparatus 210 may decode the encoded message according to the identifier corresponding to the terminal device 100 to obtain the first message including the connection configuration information. After obtaining the first message, the processing apparatus 210 determines that the terminal device 100 is in the same field and transmits a connecting request corresponding to the connection configuration message to the terminal device 100 through the Bluetooth communication transceiver 230. The processing apparatus 110 of the terminal device 100 may receive a connecting request from the terminal device 200 through the Bluetooth communication transceiver 130, and establish a connection between the terminal device 100 and the terminal device 200 according to the connecting request.

After the connection between the terminal device 100 and the terminal device 200 is established, if the terminal device 200 does not receive the audio signal or the electro-magnetic signal from the terminal device 100 during a predetermined time period, the terminal device 200 may automatically disconnect the connection with the terminal device 100.

FIG. 4 is a flowchart of a method for forming a communication link according to an embodiment of the disclosure, in which the method may be implemented by the terminal device 100 shown in FIG. 2. In the standby state, the terminal device 100 enables the processing apparatus 110 to execute a specific application AP 1, and the specific application AP1 enables the terminal device 100 to perform the following steps. In step S401, an audio signal is broadcast through a speaker, in which the audio signal includes an identifier of the terminal device 100. In step S402, the first message is encoded according to the identifier to generate an encoded message. In step S403, the electro-magnetic signal is broadcast through the Bluetooth communication transceiver, in which the electro-magnetic signal includes encoded message.

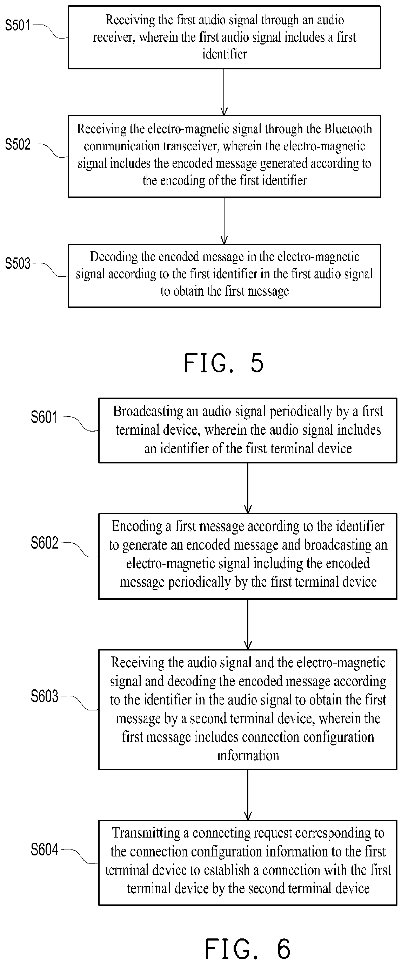

FIG. 5 is a flowchart of a method for forming a communication link according to another embodiment of the disclosure, in which the method may be implemented by the terminal device 200 shown in FIG. 2. In the standby state, the terminal device 200 enables the processing apparatus 210 to execute a specific application AP2, and the specific application AP2 enables the terminal device 200 to perform the following steps. In step S501, a first audio signal is received through an audio receiver, in which the first audio signal includes a first identifier. In step S502, the electro-magnetic signal is received through a Bluetooth communication transceiver, in which the electro-magnetic signal includes an encoded message generated according to an encoding of the first identifier. In step S503, the encoded message in the electro-magnetic signal is decoded according to the first identifier in the first audio signal to obtain the first message.

FIG. 6 is a flowchart of a method for forming a communication link according to another embodiment of the disclosure, in which the method may be implemented by the system 10 shown in FIG. 2. In step S601, the first terminal device periodically broadcasts an audio signal through its speaker, wherein the audio signal includes an identifier of the first terminal device. In step S602, the first processing apparatus of the first terminal device encodes the first message according to the identifier to generate an encoded message, and the first terminal device broadcasts an electro-magnetic signal including the encoded message periodically through the first Bluetooth communication transceiver. In step S603, the second terminal device receives the audio signal through the audio receiver and receives the electro-magnetic signal through the second Bluetooth communication transceiver. The encoded message in the electro-magnetic signal is decoded through the second processing apparatus of the second terminal device according to the identifier in the audio signal to obtain the first message, in which the first message includes the connection configuration information. In step S604, the second terminal device transmits a connecting request corresponding to the connection configuration information to the first terminal device, so as to automatically establish a connection with the first terminal device.

A method for forming a communication link according to another embodiment of the disclosure, in which the method may be implemented by the system 10 shown in FIG. 2. The method for forming a communication link, comprises: broadcasting an audio signal by a speaker 104 of a first terminal device 100, wherein the audio signal comprises an identifier of the first terminal device 100; broadcasting an electro-magnetic signal by a first Bluetooth communication transceiver 130 of the first terminal device 100, wherein the electro-magnetic signal comprises an encoded message; and encoding a first message according to the identifier to generate the encoded message by a first processing apparatus 110 of the first terminal device 100. The method further comprises: receiving the audio signal by an audio receiver 240 of a second terminal device 200; receiving an electro-magnetic signal by a second Bluetooth communication transceiver 230 of the second terminal device 200; decoding the encoded message according to the identifier to obtain the first message by a second processing apparatus 210 of the second terminal device 200, wherein the first message comprises connection configuration information; transmitting, by the second device terminal 200, a connecting request corresponding to the connection configuration information to the first terminal device 100 to establish a connection with the first terminal device 100; and disconnecting the connection between the second terminal device 200 and the first terminal device 100 when the second terminal device 200 does not receive one of the audio signal and the electro-magnetic signal during a predetermined time period.

To sum up, in the disclosure, a terminal device disposed in a specific field may broadcast an electro-magnetic signal having an encoded message of connection configuration information, and may broadcast an identifier for decoding the encoded message through an audio signal. Since the audio signal is, for example, an ultrasonic signal supported by the data over sound technology has low penetration characteristics, only the terminal device carried by the user in the field may receive the identifier for decoding the encoded message. Therefore, the terminal device carried by the user is only automatically connected to the terminal device located in the same field. Accordingly, the disclosure improves the automatic connection function of the terminal device, and prevents the terminal device from connecting to a wrong target (e.g., connecting to a device disposed outside the field) when executing the automatic connection function. In addition, the terminal device is only required to be configured with a general audio receiver to implement the functions disclosed in the disclosure. Therefore, the disclosure may reduce the manufacturing cost of the terminal device.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby to enable persons skilled in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. Therefore, the term "the disclosure", "the present disclosure" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the disclosure as defined by the following claims. Moreover, no element and component in the disclosure is intended to be dedicated to the public regardless of whether the element or component is explicitly recited in the following claims.

## Claims

1. A terminal device (100), comprising:
a speaker (140), configured to broadcast (S301) an audio signal, wherein the audio signal comprises an identifier of the terminal device (100);
a Bluetooth communication transceiver (130), configured to broadcast (S302) an electro-magnetic signal, wherein the electro-magnetic signal comprises an encoded message; and
a processing apparatus (110) electrically coupled to the Bluetooth communication transceiver (130) and the speaker (140), wherein the processing apparatus (110) is configured to encode a first message, according to the identifier, to generate the encoded message.

2. The terminal device (100) according to claim 1, wherein the first message comprises connection configuration information of the terminal device (100).

3. The terminal device (100) according to claim 2, wherein the processing apparatus (110) is configured to execute a specific application (AP1) to receive a connecting request corresponding to the connection configuration information through the Bluetooth communication transceiver (130) and establish a connection according to the connecting request.

4. The terminal device (100) according to claim 3, wherein when the terminal device (100) is in a standby state, the processing apparatus (110) is configured to execute the specific application (AP1).

5. A terminal device (200), comprising:
an audio receiver (240), configured to receive (S501) a first audio signal, wherein the first audio signal comprises a first identifier;
a Bluetooth communication transceiver (230), configured to receive (S502) an electro-magnetic signal, wherein the electro-magnetic signal comprises an encoded message; and
a processing apparatus (210) electrically coupled to the Bluetooth communication transceiver (230) and the audio receiver (240), wherein the processing apparatus (210) is configured to decode (S503) the encoded message according to the first identifier to obtain a first message.

6. The terminal device (200) according to claim 5, wherein the terminal device (200) is configured to receive (S401) the first audio signal comprising the first identifier at a first time point and a second audio signal comprising a second identifier at a second time point, wherein in response to the first time point being later than the second time point, the processing apparatus (210) is configured to execute a specific application (AP1) to select the first identifier from the first identifier and the second identifier to decode the encoded message according to the first identifier.

7. The terminal device (200) according to claim 6, wherein the first message comprises connection configuration information, and wherein in response to obtaining the connection configuration information, the processing apparatus (210) is configured to execute the specific application (AP1) to transmit a connecting request corresponding to the connection configuration information, through the Bluetooth communication transceiver (230), to establish a connection.

8. A system for forming a communication link, comprising: a first terminal device and a second terminal device,
the first terminal device (100), comprising:
a speaker (140), configured to broadcast a first audio signal, wherein the first audio signal comprises a first identifier of the first terminal device (100);
a first Bluetooth communication transceiver (130), configured to broadcast an electro-magnetic signal, wherein the electro-magnetic signal comprises an encoded message; and
a first processing apparatus (110) electrically coupled to the first Bluetooth communication transceiver (130) and the speaker (140), wherein the first processing apparatus (110) is configured to encode a first message according to the first identifier to generate the encoded message; and
the second terminal device (200), comprising:
an audio receiver (240), configured to receive the first audio signal from the first terminal device (100);
a second Bluetooth communication transceiver (230), configured to receive the electro-magnetic signal from the first terminal device (100); and
a second processing apparatus (210) electrically coupled to the second Bluetooth communication transceiver (230) and the audio receiver (240), wherein the second processing apparatus (210) is configured to decode the encoded message according to the first identifier to obtain the first message.

9. The system according to claim 8, wherein the first message comprises connection configuration information, wherein the second terminal device (200) is configured to obtain the connection configuration information and transmit a connecting request corresponding to the connection configuration information to the first terminal device (100), through the second Bluetooth communication transceiver (230), to establish a connection with the first terminal device (100); and/or
the second terminal device (200) is configured to receive the first audio signal comprising the first identifier at a first time point and a second audio signal comprising a second identifier at a second time point, and wherein in response to the first time point being later than the second time point, the second terminal device (200) is configured to select the first identifier from the first identifier and the second identifier to decode the encoded message according to the first identifier.

10. The system according to claim 8 or 9 or the terminal device (100, 200) according to any one of the preceding claims 1-7, wherein the audio signal or the first audio signal comprises an ultrasonic signal supported by the data over sound technology, preferably a frequency of the ultrasonic signal is greater than 20,000 Hz; and/or the electro-magnetic signal comprises an electro-magnetic wave signal supported by Bluetooth communication technology.

11. The system according to claim 8, 9 or 10 or the terminal device (100, 200) according to any one of the preceding claims 1-7, wherein the first identifier comprises one of the following: a serial number and a media access control (MAC) address.

12. The system according to any one of the claims 8, 9, 10 or 11 or the terminal device (100) according to any one of the preceding claims 1-4, wherein the speaker (140) is configured to broadcast the first audio signal or the audio signal periodically, and/or the first Bluetooth communication transceiver (130) or the Bluetooth communication transceiver (130) is configured to broadcast the electro-magnetic signal periodically.

13. A method for forming a communication link, comprising:
Broadcasting (S301, S401) an audio signal by a speaker (140) of a first terminal device (100), wherein the audio signal comprises an identifier of the first terminal device (100);
broadcasting (S302) an electro-magnetic signal by a first Bluetooth communication transceiver (130) of the first terminal device (100), wherein the electro-magnetic signal comprises an encoded message; and
encoding (S402) a first message according to the identifier to generate the encoded message by a first processing apparatus (110) of the first terminal device (100).

14. The method according to claim 13, further comprising:
receiving (S501) the audio signal by an audio receiver (240) of a second terminal device (200);
receiving (S502) an electro-magnetic signal by a second Bluetooth communication transceiver (230) of the second terminal device (200);
decoding (S503) the encoded message according to the identifier to obtain the first message by a second processing apparatus (210) of the second terminal device (200), wherein the first message comprises connection configuration information;
transmitting (S604), by the second device terminal (200), a connecting request corresponding to the connection configuration information to the first terminal device (100) to establish a connection with the first terminal device (100);
preferably disconnecting the connection between the second terminal device (200) and the first terminal device (100) when the second terminal device (200) does not receive one of the audio signal and the electro-magnetic signal during a predetermined time period.
